# EUROPEAN PATENT APPLICATION

(11) **EP 4 105 284 A1**
(43) Date of publication of application: **21.12.2022**
(21) Application number: 20918674.1
(22) Date of filing: 12.02.2020
(51) Int. Cl.: C09D 11/033, C09D 11/037, C09D 11/101, C09D 11/107, C09D 11/50

(54) **INFRARED-ABSORBING UV INK AND METHOD FOR PRODUCING SAME**

(71) Applicant: Kyodo Printing Co., Ltd., Tokyo 112-8501 (JP)
(72) Inventor: KOBAYASHI, Fumihito, Tokyo 112-8501 (JP); TERADA, Akira, Tokyo 112-8501 (JP); KARINO, Masahiro, Tokyo 112-8501 (JP)
(74) Representative: Ricker, Mathias
(86) International application number: PCT/JP2020/005391
(87) International publication number: WO 2021/161430

(57) **Abstract**

The infrared-absorbing UV ink according to the present invention contains a tungsten-based infrared-absorbing pigment, a solvent, an acrylic resin that is soluble to the solvent, a UV-curable acrylic monomer, and a photocuring agent.

## Description

### FIELD

The present invention relates to an infrared-absorbent UV ink and a production method therefor. Specifically, the present invention relates to a UV ink containing a tungsten-based infrared-absorbent pigment that can provide a printed object having high basic resistance, for example, a printed object having high washing resistance, can be easily produced, and is printable by various printing methods and a production method therefor.

### BACKGROUND

Infrared-absorbent inks can be used in various applications. For example, an infrared-absorbent ink can be used to print parts of securities to prevent counterfeiting. PTL 1 discloses an infrared-absorbent ink containing an infrared-absorbent dye enclosed in a curable resin. PTL 2 discloses an infrared-absorbent ink for preventing counterfeiting which contains a tungsten-based infrared-absorbent pigment.

As described in PTL 3, tungsten-based infrared-absorbent pigments are also used as a heat-ray shielding material from the infrared absorption characteristics thereof and are generally considered to have high weatherability.

### [CITATION LIST]

### [PATENT LITERATURE]

[PTL 1] Japanese Unexamined Patent Publication (Kokai) No. 2010-174164
[PTL 2] WO 2016/121801
[PTL 3] Japanese Unexamined Patent Publication (Kokai) No. 2016-29166

### SUMMARY

### [TECHNICAL PROBLEM]

The present inventors have discovered that such tungsten-based infrared-absorbent pigments are inactivated by basic substances such as detergent and lose infrared absorption ability.

The present inventors focused on high weatherability of UV inks instead and included a tungsten-based infrared-absorbent pigment in a UV ink. However, the pigment precipitated in the ink. Thus, an ink suitable for printing could not be obtained.

Therefore, an object of the present invention is to provide a UV ink containing a tungsten-based infrared-absorbent pigment that can provide a printed object having high basic resistance, particularly high washing resistance, and is suitable for printing and a production method therefor.

### [SOLUTION TO PROBLEM]

The present inventors have discovered that the above object can be achieved by the present invention having the following aspects.

### «Aspect 1»

An infrared-absorbent UV ink, containing a tungsten-based infrared-absorbent pigment, a solvent, an acrylic resin soluble in the solvent, a UV-curable acrylic monomer, and a photocuring agent.

### «Aspect 2»

The infrared-absorbent UV ink according to Aspect 1, wherein the solvent contains a first solvent capable of dispersing the pigment and a second solvent compatible with the first solvent and capable of dissolving the acrylic resin.

### «Aspect 3»

The infrared-absorbent UV ink according to Aspect 2, wherein the first solvent and the second solvent are selected from organic solvents.

### «Aspect 4»

The infrared-absorbent UV ink according to Aspect 2 or 3, wherein the first solvent contains a glycol ether organic solvent.

### «Aspect 5»

The infrared-absorbent UV ink according to any one of Aspects 2 to 4, wherein the solvent further contains a diluting solvent.

### «Aspect 6»

The infrared-absorbent UV ink according to any one of Aspects 1 to 5, containing
2 to 10 parts by mass of the tungsten-based infrared-absorbent pigment, and
5 to 40 parts by mass of the acrylic resin
to a total of 100 parts by mass of the solvent, the UV-curable acrylic monomer, and the photocuring agent.

### «Aspect 7»

The infrared-absorbent UV ink according to any one of Aspects 1 to 6, wherein the tungsten-based infrared-absorbent pigment is selected from
composite tungsten oxides, represented by general formula (1): MₓW_{y}O_{z}, wherein M is one or more elements selected from the group consisting of H, He, alkali metal elements, alkaline earth metal elements, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I; W is tungsten; O is oxygen; x, y, and z are each a positive number; 0 < x/y ≤ 1; and 2.2 ≤ z/y ≤ 3.0, or
tungsten oxides having a Magnéli phase, represented by general formula (2): W_{y}O_{z}, wherein W is tungsten; O is oxygen; y and z are each a positive number; and 2.45 ≤ z/y ≤ 2.999.

### «Aspect 8»

The infrared-absorbent UV ink according to any one of Aspects 1 to 7 which is an inkjet ink.

### «Aspect 9»

A production method for an infrared-absorbent UV ink, comprising the following:
mixing a dispersion containing a tungsten-based infrared-absorbent pigment and a first solvent capable of dispersing the pigment with an acrylic resin composition comprising an acrylic resin and a second solvent capable of dissolving the acrylic resin to obtain a viscous dispersion, and
mixing the viscous dispersion with a UV-curable acrylic monomer and a photocuring agent.

### «Aspect 10»

The production method according to Aspect 9, further comprising mixing in a diluting solvent to adjust viscosity.

### BRIEF DESCRIPTION OF DRAWINGS

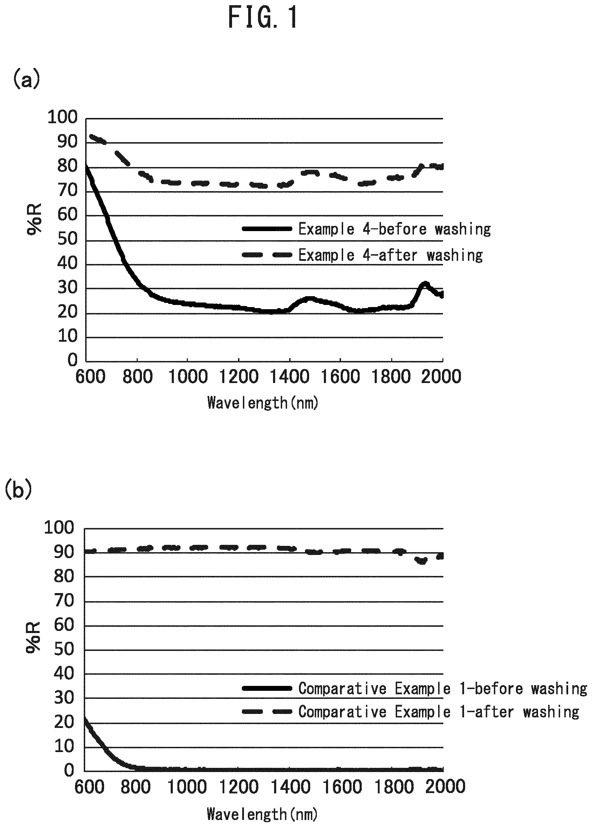

FIG. 1(a) shows an IR reflection spectrum of Example 4. FIG. 1(b) shows an IR reflection spectrum of Comparative Example 1.

### DESCRIPTION OF EMBODIMENTS

### «Infrared-absorbent UV ink»

The infrared-absorbent UV ink of the present invention contains a tungsten-based infrared-absorbent pigment, a solvent, an acrylic resin soluble in the solvent, a UV-curable acrylic monomer, and a photocuring agent.

Because the viscosity of UV-curable acrylic monomers is sufficiently low, a UV ink normally does not contain a solvent. Not including the solvent is also considered advantageous in terms of workability.

The present inventors have investigated and found that when a tungsten-based infrared-absorbent pigment is dispersed in a UV ink having a conventional configuration, the pigment would immediately precipitate in the ink, or a dispersion containing the pigment would separate from the UV ink, making the dispersion impractical as an ink for printing.

The present inventors have further investigated and discovered that a practical dispersion as an ink for printing can be obtained by first dispersing a tungsten-based infrared-absorbent pigment in an acrylic resin composition and then mixing the dispersion with a UV ink having a conventional configuration. A printed object printed with the ink was found to have very high basic resistance, specifically washing resistance. Since the printed object may be washed together with clothing, the ink of the present invention that can impart printed objects with high basic resistance is very useful.

Without being bound by theory, it is considered that an effect of the ink of the present invention as described above is brought about because the ink of the present invention contains an acrylic resin soluble in a solvent, whereby an effective resin coating can be formed around the tungsten-based infrared-absorbent pigment, and an acrylic resin has high affinity with a UV-curable acrylic monomer.

When the tungsten-based infrared-absorbent pigment is not highly dispersed before use, infrared absorbability is reduced. However, it was found that a printed object printed with the UV ink of the present invention has high infrared absorbability. Although it was considered advantageous not to include a solvent in conventional UV inks, at least in the UV ink of the present invention relating to a specific aspect, the solvent is incorporated into the UV-cured acrylic resin, whereby steps such as drying the solvent can be omitted after printing.

The ink of the present invention can be produced without adopting a particularly complicated process and can be printed by various printing methods. Particularly, for the ink of the present invention, the tungsten-based infrared-absorbent pigment can be highly dispersed. As a result, the ink is printable by inkjet. An inkjet-printable infrared-absorbent ink has not been practically implemented in the prior art. Since inkjet printing is made possible, the UV ink of the present invention is particularly advantageous.

The viscosity of the ink of the present invention is preferably about 300 mPa·s or less, about 150 mPa·s or less, or about 80 mPa·s or less at a temperature of about 25 °C. In addition, the viscosity is preferably about 10 mPa·s or more or about 15 mPa·s or more.

### <Tungsten-based infrared-absorbent pigment>

A tungsten-based infrared-absorbent pigment is dispersed in the ink of the present invention. Examples of such a tungsten-based infrared-absorbent pigment may include the pigments disclosed in the above PTL 2.

The tungsten-based infrared-absorbent pigment may be one or more selected from composite tungsten oxides, represented by general formula (1): M_{w}W_{y}O_{z}, wherein M is one or more elements selected from the group consisting of H, He, alkali metal elements, alkaline earth metal elements, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I; W is tungsten; O is oxygen; x, y, and z are each a positive number; 0 < x/y ≤ 1; and 2.2 ≤ z/y ≤ 3.0, or tungsten oxides having a Magnéli phase, represented by general formula (2): W_{y}O_{z}, wherein W is tungsten; O is oxygen; y and z are each a positive number; and 2.45 ≤ z/y ≤ 2.999.

As a production method for the tungsten-based infrared-absorbent pigment, production methods for composite tungsten oxides or tungsten oxides having a Magnéli phase described in Japanese Unexamined Patent Publication (Kokai) No. 2005-187323 can be used.

An element M is added to the composite tungsten oxide represented by the general formula (1), whereby, including when z/y = 3.0 in the general formula (1), free electrons are generated, the absorption characteristics from the free electrons are exhibited in the near-infrared light wavelength region, and the composite tungsten oxide is effective as a material that absorbs infrared rays near the wavelength of 1000 nm.

Particularly, from the viewpoint of improving the optical characteristics and weatherability as an infrared-absorbent material, the M element can be set to one or more of Cs, Rb, K, Tl, In, Ba, Li, Ca, Sr, Fe, and Sn.

The composite tungsten oxide represented by the general formula (1) may be treated with a silane coupling agent, whereby infrared absorbability and transparency in the visible light wavelength region are enhanced.

When the value of x/y indicating the amount of the element M added is greater than 0, sufficient free electrons are generated and a near-infrared absorption effect can be sufficiently obtained. The larger the amount of the element M added, the greater the number of free electrons supplied, and in turn the greater the near-infrared absorption effect. Normally, this effect saturates at the value of x/y of about 1. The value of x/y may be set to 1 or less to prevent the formation of an impurity phase in a pigment-containing layer. The value of x/y may be 0.001 or greater, 0.2 or greater, or 0.30 or greater and may be 0.85 or less, 0.5 or less, or 0.35 or less. In particular, the value of x/y can be set to 0.33.

The value of z/y in the general formulas (1) and (2) indicates the level of oxygen control. For the composite tungsten oxide represented by the general formula (1), since the value of z/y satisfies the relation 2.2 ≤ z/y ≤ 3.0, in addition to operating the same oxygen control mechanism as the tungsten oxide represented by the general formula (2), even when z/y = 3.0, free electrons are supplied due to the addition of the element M. In the general formula (1), the value of z/y may satisfy the relation 2.45 ≤ z/y ≤ 3.0.

When the composition tungsten oxide represented by the general formula (1) comprises a hexagonal crystal structure or consists of a hexagonal crystal structure, transmission in the visible light wavelength region of infrared-absorbent material microparticles is increased, and absorption in the near-infrared light wavelength region is increased. When cations of the element M are added to and present in the voids of the hexagonal crystal, the transmission in the visible light wavelength region is increased and the absorption in the near-infrared light wavelength region is increased. Generally, when an element M having a large ionic radius is added, hexagonal crystals are formed. Specifically, hexagonal crystals are easily formed when an element having a large ionic radius such as Cs, K, Rb, Tl, In, Ba, Sn, Li, Ca, Sr, or Fe is added. However, the present invention is not limited to these elements, and for elements other than these elements, the additive element M may be present in the hexagonal voids formed by WO₆ units.

When the composite tungsten oxide having a hexagonal crystal structure has a uniform crystal structure, the amount of the additive element M added can be set to 0.2 or greater and 0.5 or less or 0.30 or greater and 0.35 or less in terms of the value of x/y. In particular, the value of x/y can be set to 0.33. When the value of x/y is 0.33, it is considered that the additive element M is arranged substantially in all the hexagonal voids.

Other than hexagonal, the tetragonal or cubic tungsten bronze also has a near-infrared absorption effect. Depending on the crystal structure, the absorption sites for the near-infrared light wavelength region tend to change, and the absorption sites tend to move to the long wavelength side in the order of cubic < tetragonal < hexagonal. In addition, the absorption in the visible light wavelength region is reduced in the order of hexagonal < tetragonal < cubic. Thus, in applications where the amount of light in the visible light wavelength region transmitted and the amount of light in the near-infrared light wavelength region absorbed are increased, the hexagonal tungsten bronze may be used.

The tungsten oxide having a Magnéli phase represented by the general formula (2) is suitably used as a near-infrared-absorbent pigment, since the so-called "Magnéli phase" having a composition ratio in which the value of z/y satisfies the relation 2.45 ≤ z/y ≤ 2.999 imparts high stability and high absorption characteristics in the near-infrared light wavelength region.

For the pigment as described above, the transparent color tone is often bluish to greenish due to significant absorption of light in the near-infrared light wavelength region, particularly near the wavelength of 1000 nm. In addition, the dispersed particle size of the tungsten-based infrared-absorbent pigment can be selected on a case-by-case basis according to the purpose of use thereof. In applications where transparency is maintained, it is preferable that the dispersed particle size be 2000 nm or less by volume average. When the dispersed particle size is 2000 nm or less, the difference between the peak of transmittance (reflectance) in the visible light wavelength region and the bottom of absorption in the near-infrared light wavelength region becomes large, and the effect of a near-infrared-absorbent pigment having transparency in the visible light wavelength region can be exhibited. Also, for particles having a dispersed particle size of less than 2000 nm, light is not completely blocked by scattering, and visibility in the visible light wavelength region can be maintained while transparency can be efficiently maintained.

When transparency in the visible light wavelength region is emphasized, scattering by the particles is preferably taken into account. Specifically, the dispersed particle size by volume average of the tungsten-based infrared-absorbent pigment is preferably 200 nm or less and more preferably 100 nm or less, 50 nm or less, or 30 nm or less. When the dispersed particle size of the infrared-absorbent material microparticles is 200 nm or less, geometric scattering or Mie scattering is reduced, and the microparticles enter the Rayleigh scattering region. In the Rayleigh scattering region, the scattered light decreases in inverse proportion to the sixth power of the dispersed particle size. Thus, as the dispersed particle size decreases, scattering is reduced and transparency is improved. The dispersed particle size is preferably 100 nm or less, since the amount of scattered light becomes very small. From the viewpoint of avoiding light scattering, it is preferable that the dispersed particle size be small. On the other hand, a dispersed particle size of 1 nm or more, 3 nm or more, 5 nm or more, or 10 nm or more tends to facilitate industrial production. The dispersed particle size by volume average of the tungsten-based infrared-absorbent pigment was measured using a Microtrac particle size analyzer (manufactured by Nikkiso Co., Ltd.) by a dynamic light scattering method, in which microparticles in Brownian motion are irradiated with laser light to obtain light scattering information, and a particle size is determined therefrom.

The content of the tungsten-based infrared-absorbent pigment in the ink of the present invention may be 0.1% by weight or more, 0.5% by weight or more, 1.0% by weight or more, 2.0% by weight or more, or 3.0% by weight or more and may be 20% by weight or less, 10% by weight or less, 8.0% by weight or less, 5.0% by weight or less, 3.0% by weight or less, or 1.0% by weight or less.

The ink of the present invention may contain 3 parts by mass or more, 5 parts by mass or more, 8 parts by mass or more, or 10 parts by mass or more and may contain 50 parts by mass or less, 40 parts by mass or less, 30 parts by mass or less, 20 parts by mass or less, 15 parts by mass or less, or 10 parts by mass or less of the tungsten-based infrared-absorbent pigment to 100 parts by mass of the solvent.

The ink of the present invention may contain 1 part by mass or more, 2 parts by mass or more, 3 parts by mass or more, or 4 parts by mass or more and may contain 20 parts by mass or less, 15 parts by mass or less, 10 parts by mass or less, 8 parts by mass or less, 5 parts by mass or less, or 4 parts by mass or less of the tungsten-based infrared-absorbent pigment to a total of 100 parts by mass of the solvent, the UV-curable acrylic monomer, and the photocuring agent.

### <Acrylic resin>

The acrylic resin used in the ink of the present invention is not particularly limited as long as the acrylic resin is soluble in the solvent, has high affinity with the UV-curable acrylic monomer, and can be used without separating in the ink.

Examples of the acrylic resin include polymers and copolymers of acrylic acid and esters thereof, acrylamide, acrylonitrile, and methacrylic acid and esters thereof. In particular, an acrylic urethane-based resin, a styrene acrylic resin, or an acrylic polyol-based resin can be used.

The glass transition temperature (Tg) of the acrylic resin is not particularly limited. For example, the glass transition temperature may be 0 °C or higher, 30 °C or higher, 50 °C or higher, or 70 °C or higher and may be 150 °C or lower, 120 °C or lower, or 100 °C or lower.

The content of the acrylic resin in the ink of the present invention may be 1.0% by weight or more, 3.0% by weight or more, 5.0% by weight or more, 10% by weight or more, or 15% by weight or more and may be 40% by weight or less, 30% by weight or less, 20% by weight or less, 15% by weight or less, 10% by weight or less, or 8.0% by weight or less.

The ink of the present invention may contain 5 parts by mass or more, 10 parts by mass or more, 15 parts by mass or more, 20 parts by mass or more, or 30 parts by mass or more and may contain 100 parts by mass or less, 80 parts by mass or less, 60 parts by mass or less, 50 parts by mass or less, 40 parts by mass or less, or 30 parts by mass or less of the acrylic resin to 100 parts by mass of the solvent.

The ink of the present invention may contain 3 parts by mass or more, 5 parts by mass or more, 8 parts by mass or more, or 10 parts by mass or more and may contain 50 parts by mass or less, 40 parts by mass or less, 30 parts by mass or less, 20 parts by mass or less, or 15 parts by mass or less of the acrylic resin to a total of 100 parts by mass of the solvent, the UV-curable acrylic monomer, and the photocuring agent.

### <Solvent>

A solvent is contained in the UV ink of the present invention. A solvent is normally not contained in conventional UV inks, and not including the solvent is also considered advantageous in terms of workability. However, at least in the UV ink of the present invention relating to a specific aspect, the solvent is incorporated into the UV-cured acrylic resin, whereby steps such as drying the solvent can be omitted after printing.

The solvent used in the present invention is not particularly limited as long as the solvent can dissolve the acrylic resin and an advantageous effect of the present invention is obtained. Examples of the solvent used in the present invention include various organic solvents, for example, alcohols such as ethanol, propanol, butanol, isopropyl alcohol, isobutyl alcohol, and diacetone alcohol; ethers such as methyl ether, ethyl ether, and propyl ether; esters such as ethyl acetate; ketones such acetone, methyl ethyl ketone, diethyl ketone, cyclohexanone, ethyl isobutyl ketone, and methyl isobutyl ketone; aromatic hydrocarbons such as toluene, xylene, and benzene; aliphatic hydrocarbons such as normal hexane, heptane, and cyclohexane; and glycol ethers such as propylene glycol monomethyl ether acetate and propylene glycol monoethyl ether.

It is preferable that a plurality of solvents be combined and used in the present invention. Particularly, it is preferable that the solvent used in the present invention use at least a combination of a first solvent capable of dispersing a tungsten-based infrared-absorbent pigment and a second solvent compatible with the first solvent and capable of dissolving an acrylic resin. In this case, the ink of the present invention can be relatively easily prepared by a method comprising mixing a dispersion containing the tungsten-based infrared-absorbent pigment and the first solvent with a resin composition comprising an acrylic resin and the second solvent.

The first solvent, the second solvent, and the diluting solvent may all be the same solvent, may be the same for two thereof, or may be different solvents. The solvents described above can be used for all thereof. Examples of the first solvent may include particularly organic solvents from glycol ethers. Examples of the second solvent may include particularly solvents from aromatic hydrocarbons or aliphatic hydrocarbons. Examples of the diluting solvent may include particularly solvents from ethers, esters, ketones, aromatic hydrocarbons, and aliphatic hydrocarbons.

The content of the solvent in the ink of the present invention may be 10% by weight or more, 20% by weight or more, 25% by weight or more, 30% by weight or more, 35% by weight or more, or 40% by weight or more and may be 60% by weight or less, 55% by weight or less, 50% by weight or less, 45% by weight or less, 40% by weight or less, or 35% by weight or less.

The ink of the present invention may contain 10 parts by mass or more, 20 parts by mass or more, 30 parts by mass or more, 40 parts by mass or more, 45 parts by mass or more, or 50 parts by mass or more and may contain 80 parts by mass or less, 70 parts by mass or less, 60 parts by mass or less, 50 parts by mass or less, or 45 parts by mass or less of the solvent to a total of 100 parts by mass of the solvent, the UV-curable acrylic monomer, and the photocuring agent.

### <UV-curable acrylic monomer>

An acrylic monomer used in conventional UV inks can be used for the UV-curable acrylic monomer. In the present specification, the acrylic monomer, if a liquid at ambient temperature, includes not only monomers but also oligomers.

Examples of such an acrylic monomer may include acrylates having an ethylenically unsaturated bond. A monofunctional acrylate and/or a bifunctional acrylate may be used.

Examples of the monofunctional acrylate include caprolactone acrylate, isodecyl acrylate, isooctyl acrylate, isomyristyl acrylate, isostearyl acrylate, 2-ethylhexyl-diglycol diacrylate, 2-hydroxybutyl acrylate, 2-acryloxyethyl hexahydrophthalic acid, neopentyl glycol acrylic acid benzoic acid ester, isoamyl acrylate, lauryl acrylate, stearyl acrylate, butoxyethyl acrylate, ethoxy-diethylene glycol acrylate, methoxy-triethylene glycol acrylate, methoxy-polyethylene glycol acrylate, methoxydipropylene glycol acrylate, phenoxyethyl acrylate, phenoxy-polyethylene glycol acrylate, nonylphenol ethylene oxide adduct acrylate, tetrahydrofurfuryl acrylate, isobornyl acrylate, 2-hydroxyethyl acrylate, 2-hydropropyl acrylate, 2-hydroxy-3-phenoxypropyl acrylate, 2-acryloxyethyl-succinic acid, 2-acryloxyethyl-phthalic acid, and 2-acryloxyethyl-2-hydroxyethyl-phthalic acid.

Examples of the bifunctional acrylate include hydroxypivalic acid neopentyl glycol acrylate, alkoxylated hexanediol diacrylate, polytetramethylene glycol diacrylate, trimethylolpropane acrylic acid benzoic acid ester, diethylene glycol diacrylate, triethylene glycol diacrylate, tetraethylene glycol diacrylate, polyethylene glycol (200) diacrylate, polyethylene glycol (400) diacrylate, polyethylene glycol (600) diacrylate, neopentyl glycol diacrylate, 1,3-butylene glycol diacrylate, 1,4-butanediol diacrylate, 1,6-hexanediol diacrylate, 1,9-nonanediol diacrylate, dimethylol-tricyclodecane diacrylate, and bisphenol A diacrylate.

As the oligomer, an oligomer such as urethane acrylate, polyester acrylate, epoxy acrylate, silicon acrylate, or polybutadiene acrylate is preferably used.

The content of the UV-curable acrylic monomer in the ink of the present invention may be 20% by weight or more, 25% by weight or more, 30% by weight or more, 35% by weight or more, 45% by weight or more, or 50% by weight or more and may be 60% by weight or less, 55% by weight or less, 50% by weight or less, 45% by weight or less, 40% by weight or less, or 35% by weight or less.

The ink of the present invention may contain 10 parts by mass or more, 20 parts by mass or more, 30 parts by mass or more, 40 parts by mass or more, 45 parts by mass or more, or 50 parts by mass or more and may contain 80 parts by mass or less, 70 parts by mass or less, 60 parts by mass or less, 50 parts by mass or less, or 45 parts by mass or less of the UV-curable acrylic monomer to a total of 100 parts by mass of the solvent, the UV-curable acrylic monomer, and the photocuring agent.

### <Photocuring agent>

A photocuring agent is a compound that generates radicals such as active oxygen by ultraviolet irradiation. A photocuring agent conventionally used in UV inks can be used. The photocuring agent used in the present invention is not particularly limited as long as the above UV-curable acrylic monomer can be photopolymerized.

Examples of the photopolymerization initiator include, but not are limited to, acetophenones such as acetophenone, α-aminoacetophenone, 2,2-diethoxyacetophenone, p-dimethylaminoacetophenone, 2-hydroxy-2-methyl-1-phenylpropan-1-one, benzyldimethylketal, 1-(4-isopropylphenyl)-2-hydroxy-2-methylpropan-1-one, 4-(2-hydroxyethoxy)phenyl-(2-hydroxy-2-methylpropyl)ketone, 4-(2-hydroxyethoxy)phenyl-(2-hydroxy-2-propyl)ketone, 1-hydroxycyclohexyl-phenylketone, 2-methyl-2-morpholino(4-thiomethylphenyl)propan-1-one, and 2-benzyl-2-dimethylamino-1-(4-morpholinophenyl)-butanone; benzoins such as benzoin, benzoin methyl ether, benzoin ethyl ether, benzoin-n-propyl ether, benzoin isopropyl ether, benzoin-n-butyl ether, benzoin isobutyl ether, benzoin dimethyl ketal, and benzoin peroxide; acyl phosphine oxide such as 2,4,6-trimethoxybenzoin diphenyl phosphine oxide; benzyl- and methylphenyl-glyoxyesters; benzophenones such as benzophenone, methyl-4-phenyl benzophenone, o-benzoyl benzoate, 2-chlorobenzophenone, 4,4'-dichlorobenzophenone, hydroxybenzophenone, 4-benzoyl-4'-methyl-diphenyl sulfide, acrylic-benzophenone, 3,3',4,4'-tetra(t-butylperoxycarbonyl)benzophenone, and 3,3'-dimethyl-4-methoxybenzophenone; thioxanthones such as 2-methylthioxanthone, 2-isopropylthioxanthone, 2,4-dimethylthioxanthone, 2,4-diethylthioxanthone, 2-chlorothioxanthone, and 2,4-dichlorothioxanthone; aminobenzophenones such as Michler's ketone and 4,4'-diethylaminobenzophenone; tetramethylthiuram monosulfide; azobisisobutyronitrile; di-tert-butyl peroxide; 10-butyl-2-chloroacridone; 2-ethylanthraquinone; 9,10-phenanthrenequinone; camphorquinone; and titanocenes, and combinations thereof.

The above photopolymerization initiator may be used in combination with a photopolymerization initiation aid such as ethyl 4-dimethylaminobenzoate or isoamyl 4-dimethylaminobenzoate.

The amount of the photocuring agent used to 100 parts by weight of the UV-curable acrylic monomer may be 0.1 parts by weight or more, 0.5 parts by weight or more, 1.0 parts by weight or more, 2.0 parts by weight or more, or 3.0 parts by weight or more and may be 20 parts by weight or less, 10 parts by weight or less, 8.0 parts by weight or less, 5.0 parts by weight or less, 3.0 parts by weight or less, or 1.0 parts by weight or less.

### <Others - dispersant>

A dispersant may be contained in the ink to enhance the dispersibility of the tungsten-based infrared-absorbent pigment in the ink. Examples of the dispersant may include compounds having a functional group such as an amine, a hydroxyl group, a carboxyl group, or an epoxy group. These functional groups are adsorbed on the surface of the tungsten-based infrared-absorbent pigment and prevent agglomeration of the tungsten-based infrared-absorbent pigment, whereby the tungsten-based infrared-absorbent pigment is uniformly dispersed in the ink.

Dispersants that can be suitably used include, but are not limited to, phosphoric acid ester compounds, polymer-based dispersants, silane-based coupling agents, titanate-based coupling agents, and aluminum-based coupling agents. Examples of the polymer-based dispersant may include acrylic polymer dispersants, urethane polymer dispersants, acrylic/block copolymer-based polymer dispersants, polyether dispersants, and polyester-based polymer dispersants. Regardless thereof, it is preferable that the dispersant be a powder, since a powder is easy to knead with a thermoplastic resin.

The content of the dispersant in the ink may be 0.5% by weight or more, 1.0% by weight or more, 1.5% by weight or more, or 2.0% by weight or more and may be 5.0% by weight or less, 3.0% by weight or less, 2.0% by weight or less, or 1.5% by weight or less.

The ink of the present invention may contain 0.5 parts by mass or more, 1.0 parts by mass or more, 1.5 parts by mass or more, or 2.0 parts by mass or more and may contain 10 parts by mass or less, 8.0 parts by mass or less, 5.0 parts by mass or less, 3.0 parts by mass or less, or 2.0 parts by mass or less of the dispersant to a total of 100 parts by mass of the solvent, the UV-curable acrylic monomer, and the photocuring agent.

The weight of the dispersant to the weight of the tungsten-based infrared-absorbent pigment (weight of dispersant/weight of tungsten-based infrared-absorbent pigment) may be 1.0 or greater, 2.0 or greater, 3.0 or greater, or 4.0 or greater and may be 10 or less, 8.0 or less, 5.0 or less, 4.0 or less, 3.0 or less, 2.0 or less, or 1.0 or less.

### «Production method for infrared-absorbent UV ink»

The production method for an infrared-absorbent UV ink of the present invention comprises mixing a pigment dispersion containing a tungsten-based infrared-absorbent pigment and a first solvent with an acrylic resin composition comprising an acrylic resin and a second solvent to obtain a viscous dispersion, and mixing the viscous dispersion with a UV-curable acrylic monomer and a photocuring agent.

The method of the present invention may further comprise mixing a diluting solvent to adjust viscosity. In this case, the diluting solvent may be mixed in the pigment dispersion and/or the acrylic resin composition before the viscous dispersion is obtained, may be mixed in the viscous dispersion after the viscous dispersion is obtained, or may be mixed in the UV-curable acrylic resin monomer.

The infrared-absorbent UV ink obtained by the method of the present invention may be the above infrared-absorbent UV ink. Thus, each configuration relating to the production method of the present invention can be referenced to each configuration described for the UV ink of the present invention.

The present invention will be further specifically described by the following Examples. However, the present invention is not limited thereto.

### EXAMPLES

### «Production Example»

10 grams of ethyl acetate as a diluting solvent was used to dilute 7.5 grams of an acrylic resin composition (DIC Corporation, ACRYDIC^{™} A-814) comprising an acrylic resin and a solvent therefor. To the dilution, 10 grams of a pigment dispersion liquid (Sumitomo Metal Mining Co., Ltd., CWO^{™} YMS-01A2) in which a tungsten-based infrared-absorbent pigment was dispersed in a solvent was added and mixed. To the mixture, 30 grams of a UV-curable composition, comprising a UV-curable acrylic monomer and a photocuring agent, was added and mixed to obtain the ink of Example 1.

The above acrylic resin composition (DIC Corporation, ACRYDIC^{™} A-814) contained 50% by weight of an acrylic resin (Tg: 85 °C), 42.5% by weight of toluene, and 7.5% by weight of ethyl acetate.

The above pigment dispersion liquid (Sumitomo Metal Mining Co., Ltd., CWO^{™} YMS-01A2) contained 25% by weight of hexagonal Cs_{0.33}WO₃ as a tungsten-based infrared-absorbent pigment, 58.9% by weight of propylene glycol monomethyl ether acetate, 1.86% by weight of dipropylene glycol monomethyl ether, 1.74% by weight of butyl acetate, and 12.5% by weight of a dispersant.

4 parts by mass of a photocuring agent (BASF, IRGACURE 500) were mixed with 100 parts by weight of a UV-curable acrylic monomer (T&K TOKA Corporation, BESTCURE) to prepare a UV-curable composition.

As shown in Table 1, the inks of Examples 2 to 5 were obtained by changing the weight ratios.

The inks of Examples 6 and 7 were obtained in the same manner as in Example 4, except that the acrylic resin composition was changed to ACRYDIC VU-191 and ACRYDIC WFL-523, respectively. The ACRYDIC VU-191 contains 55% by weight of an acrylic resin (Tg: 95 °C), 22.5% by weight of toluene, and 22.5% by weight of isobutyl acetate. The ACRYDIC WFL-523 contains 50% by weight of an acrylic resin (Tg: 85 °C), 35% by weight of butyl acetate, and 15% by weight of butanol.

Without using the acrylic resin composition and the UV-curable composition, the ink of Comparative Example 1 was obtained.

Production of an ink as Comparative Example 2 without using the above acrylic resin composition and the diluting solvent was attempted, but the tungsten-based infrared-absorbent pigment precipitated, and a printable ink could not be obtained.

Production of an ink as Comparative Example 3 without using the above acrylic resin composition only was attempted, but a printable ink could not be obtained as in Comparative Example 2.

### «Evaluation»

### <Viscosity>

The viscosities of the inks of the above Examples 1 to 7 and Comparative Example 1 were measured in 2-ml samples at a temperature of 25 °C, in accordance with JIS Z 8803, with an SV-1A (natural frequency of 30 Hz) tuning-fork vibro viscometer manufactured by A&D Company, Limited.

### <Infrared reflectance before and after washing>

The inks of the above Examples 1 to 7 and Comparative Example 1 were coated on OCR paper with a #10 wire bar. Each coated object was sized to 2 cm × 4 cm and immersed in an aqueous solution having a pH of 12 at a temperature of 90 °C for 30 min. The aqueous solution was prepared by adding 0.5% by weight of a laundry detergent (Kao Corporation, Attack^{™}) and 1% by weight of sodium carbonate to distilled water. After immersion, the coated object was washed with water and dried, and then the infrared reflectance was measured for each example, in accordance with JIS K 0115, with a UV-vis reflection spectrum measuring instrument. The reflectance at a wavelength of 1000 nm was compared before and after the washing test. The lower the value of infrared reflectance, the higher the infrared absorption rate.

### <Pigment residual ratio before and after washing>

The reflectance at a wavelength of 1000 nm before the washing test with respect to the reflectance at a wavelength of 1000 nm after the washing test was calculated for the above coated object. The calculated value (pigment residual ratio) was used as an index to determine how much of the infrared absorption function was maintained.

### <Observation results by infrared camera after washing>

The above coated object after washing was observed with an infrared camera. The camera used an infrared LED having a wavelength of 940 nm for infrared illumination and had a filter for cutting light having a wavelength of 820 nm or less. The coated object was observed under the observation conditions of 250,000 pixels for the number of pixels, horizontal 67° and vertical 47° for the lens angle of view, and 22 × 18 mm for the plotting range and judged as follows:
Good: Coated portion can be clearly identified;
Fair: If uncoated portion and coated portion are checked simultaneously, the coated portion can be identified;
Poor: Even when uncoated portion and coated portion are checked simultaneously, the coated portion cannot be identified.

### «Results»

The results are summarized in Table 1. In addition, the infrared reflection spectra of Example 4 and Comparative Example 1 are shown in FIG. 1.

**[Table 1]**

| | Ink composition | | | | Ink viscosity [mPa·s] | Reflectance at 1000 nm | | Pigment residual ratio | Infrared camera observation |
|---|---|---|---|---|---|---|---|---|---|
| | Pigment dispersion liquid | Acrylic composition | Diluting solvent | UV-curable composition | | Before washing [%R] | After washing [%R] | | |
| Example 1 | 1 | 0.75 | 1 | 3 | 16 | 13.3 | 90.4 | 14.7 | Fair |
| Example 2 | 1 | 1 | 1 | 3 | 28 | 14.4 | 86.7 | 16.6 | Good |
| Example 3 | 1 | 1.5 | 1 | 3 | 45 | 16.5 | 84.4 | 19.5 | Good |
| Example 4 | 1 | 2 | 1 | 3 | 76 | 24.0 | 73.5 | 32.7 | Good |
| Example 5 | 1 | 4 | 1 | 3 | 136 | 36.7 | 73.9 | 49.7 | Good |
| Example 6 | 1 | 2^{∗1} | 1 | 3 | 60 | 19.5 | 84.2 | 19.6 | Good |
| Example 7 | 1 | 2^{∗2} | 1 | 3 | 68 | 26.9 | 83.6 | 22.4 | Good |
| Comparative Example 1 | 1 | 0 | 5 | 0 | 9 | 0.54 | 92.2 | 0.6 | Poor |
| Comparative Example 2 | 1 | 0 | 0 | 3 | Not measured | CWO precipitated; not printable | | | Not measured |
| Comparative Example 3 | 1 | 0 | 1 | 3 | Not measured | CWO precipitated; not printable | | | Not measured |

| | | | | | | | | | |
|---|---|---|---|---|---|---|---|---|---|
| ^{∗1} ACRYDIC VU-191 ^{∗2} ACRYDIC WFL-523 | | | | | | | | | |

With reference to Examples 1 to 5, it was found that the larger the amount of the acrylic resin-based composition, the higher the pigment residual ratio. The reason therefor is believed to be that the tungsten-based infrared-absorbent pigment was coated with an acrylic resin to increase affinity with the UV-curable acrylic monomer, and from the coating thereof, alkaline resistance was developed. With reference to Examples 6 and 7, it was found that the same effect can be obtained even when the acrylic resin-based composition is changed.

In Comparative Example 1, the infrared absorption function was lost in the washing test, due to the low alkaline resistance of the tungsten-based infrared-absorbent pigment.

## Claims

1. An infrared-absorbent UV ink, containing a tungsten-based infrared-absorbent pigment, a solvent, an acrylic resin soluble in the solvent, a UV-curable acrylic monomer, and a photocuring agent.

2. The infrared-absorbent UV ink according to claim 1, wherein the solvent contains a first solvent capable of dispersing the pigment and a second solvent compatible with the first solvent and capable of dissolving the acrylic resin.

3. The infrared-absorbent UV ink according to claim 2, wherein the first solvent and the second solvent are selected from organic solvents.

4. The infrared-absorbent UV ink according to claim 2 or 3, wherein the first solvent contains a glycol ether organic solvent.

5. The infrared-absorbent UV ink according to any one of claims 2 to 4, wherein the solvent further contains a diluting solvent.

6. The infrared-absorbent UV ink according to any one of claims 1 to 5, containing
2 to 10 parts by mass of the tungsten-based infrared-absorbent pigment, and
5 to 40 parts by mass of the acrylic resin to a total of 100 parts by mass of the solvent, the UV-curable acrylic monomer, and the photocuring agent.

7. The infrared-absorbent UV ink according to any one of claims 1 to 6, wherein the tungsten-based infrared-absorbent pigment is selected from
composite tungsten oxides, represented by general formula (1): MₓW_{y}O_{z}, wherein M is one or more elements selected from the group consisting of H, He, alkali metal elements, alkaline earth metal elements, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I; W is tungsten; O is oxygen; x, y, and z are each a positive number; 0 < x/y ≤ 1; and 2.2 ≤ z/y ≤ 3.0, or
tungsten oxides having a Magnéli phase, represented by general formula (2): W_{y}O_{z}, wherein W is tungsten; O is oxygen; y and z are each a positive number; and 2.45 ≤ z/y ≤ 2.999.

8. The infrared-absorbent UV ink according to any one of claims 1 to 7 which is an inkjet ink.

9. A production method for an infrared-absorbent UV ink, comprising the following:
mixing a dispersion containing a tungsten-based infrared-absorbent pigment and a first solvent capable of dispersing the pigment with an acrylic resin composition comprising an acrylic resin and a second solvent capable of dissolving the acrylic resin to obtain a viscous dispersion, and
mixing the viscous dispersion with a UV-curable acrylic monomer and a photocuring agent.

10. The production method according to claim 9, further comprising mixing in a diluting solvent to adjust viscosity.
